(19) Europäisches Patentamt
European Patent Office
Office européen des brevets

(11) **EP 3 730 463 B1**

(12) **EUROPÄISCHE PATENTSCHRIFT**

(45) Veröffentlichungstag und Bekanntmachung des Hinweises auf die Patenterteilung:
**02.08.2023 Patentblatt 2023/31**

(21) Anmeldenummer: **20171127.2**

(22) Anmeldetag: **23.04.2020**

(51) Internationale Patentklassifikation (IPC):
**C03C 3/087** *(2006.01)* **C03C 4/02** *(2006.01)*
**C03C 4/08** *(2006.01)* **C03C 10/00** *(2006.01)*

(52) Gemeinsame Patentklassifikation (CPC):
**C03C 10/0027; C03C 3/087; C03C 4/02; C03C 4/08**

(54) **ABDECKPLATTE FÜR EINRICHTUNGS- UND AUSSTATTUNGSGEGENSTÄNDE FÜR KÜCHEN ODER LABORE**

COVER PLATE FOR FITTINGS AND EQUIPMENT FOR KITCHENS OR LABORATORIES

PLAQUE DE COUVERTURE POUR MOBILIERS OU ÉQUIPEMENTS POUR CUISINE OU LABORATOIRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.04.2019 DE 102019110819**

(43) Veröffentlichungstag der Anmeldung:
**28.10.2020 Patentblatt 2020/44**

(73) Patentinhaber: **SCHOTT AG**
**55122 Mainz (DE)**

(72) Erfinder:
• **LANGER, Philipp**
**67577 Alsheim (DE)**
• **BOCKMEYER, Matthias**
**55124 Mainz (DE)**
• **WEISS, Evelin**
**55131 Mainz (DE)**

(74) Vertreter: **Schott Corporate IP**
**Hattenbergstraße 10**
**55122 Mainz (DE)**

(56) Entgegenhaltungen:
**DE-U1-202018 102 534 DE-U1-202018 102 537**

**Beschreibung**

Die Erfindung betrifft eine Abdeckplatte für Einrichtungs- oder Ausstattungsgegenstände für Küchen oder Labore mit einem Grundkörper aus transparenter, volumengefärbter Glaskeramik.

In Einrichtungs- und Ausstattungsgegenständen beispielsweise für Küchen und Labore kommen Scheiben aus Glaskeramik in vielfältiger Weise zum Einsatz. So werden Scheiben aus Glaskeramik beispielsweise als Sichtfenster in Türen von Öfen, als Abdeckplatte von Bedienelementen von Kochgeräten oder als Arbeitsplatte eines Küchenschranks oder Labormöbels, sowohl im privaten als auch im professionellen Umfeld verwendet. Häufig weisen solche Gegenstände zusätzlich Beleuchtungssysteme aus mehreren Leuchtelementen auf, die beispielsweise zur Darstellung eines Betriebszustandes oder zur dekorativen Beleuchtung vorgesehen sind, indem sie durch die Scheibe aus Glaskeramik hindurch leuchten.

Insbesondere für Beleuchtungssysteme, die Teil einer Benutzerschnittstelle eines solchen Gegenstandes sind, werden die technischen Anforderungen immer komplexer. Im Zentrum steht dabei stets, die Bedienung des Gegenstandes für den Benutzer zu erleichtern und die Betriebssicherheit zu erhöhen. Gleichzeitig sollen die dafür zum Einsatz kommenden Scheiben aus Glaskeramik eine größtmögliche Flexibilität aufweisen, so dass sie mit möglichst jeder denkbaren Art von Beleuchtungssystem kombinierbar sind. Dies gilt insbesondere auch im Hinblick auf die im Markt weit verbreiteten Benutzerschnittstellen mit roten Leuchtelementen, mit denen auch neu entwickelte Glaskeramiken weiterhin kompatibel sein sollen.

Für solche flexibel einsetzbaren Glaskeramiken wirken sich Skaleneffekte besonders positiv auf die Wirtschaftlichkeit aus, da sie weitgehend universell einsetzbar sind und somit nicht spezifisch auf spezielle Beleuchtungslösungen angepasst werden müssen.

Beispiele für solche komplexen Anforderungen an Beleuchtungssysteme für Benutzerschnittstellen sind die Verwendung mehrerer Lichtfarben zur Darstellung unterschiedlicher Funktionen, wobei alle Farben mit hoher Helligkeit darstellbar sein müssen. Hierfür werden vor allem blaues, rotes und weißes Licht bevorzugt. Grünes Licht kommt als einzelne Lichtfarbe in Benutzerschnittstellen eher selten als eine solche Kontrastfarbe zum Einsatz, da insbesondere der farbliche Unterschied zu roten Anzeigen für Menschen mit einer Rot-Grün-Sehschwäche nicht wahrnehmbar wäre. Dadurch könnte deshalb ein erhöhtes Risiko von Fehlbedienungen entstehen.

Leuchtmittel, die grünes Licht aussenden, kommen deshalb tendenziell eher in Kombination mit andersfarbigen Leuchtmitteln zum Einsatz. Dies kann beispielsweise zur Erzeugung von kontrastreichen Mischfarben, wie beispielsweise weiß aus rot, grün und blau, erfolgen. Alternativ können verschiedene Lichtfarben räumlich nebeneinander angeordnet sein, beispielsweise in der Reihenfolge rot, gelb, grün um ähnlich einer Ampel betriebszustände anzuzeigen. Im letztgenannte Fall wird die Betriebssicherheit beispielsweise durch die räumliche Trennung der Lichtfarben in Kombination mit einer deutlichen Wahrnehmbarkeit aller Farben gewährleistet.

Ein weiteres Beispiel ist die Einstellung der Beleuchtung bei unterschiedlichen Helligkeiten, um beispielsweise für die Interaktion mit dem Nutzer aktivierte Teile der Benutzerschnittstelle gegenüber nicht aktivierten Teilen hervorzuheben. In einem solchen Fall können beispielsweise aktivierte Teile heller dargestellt werden, als nicht aktivierte Teile.

Gleichzeitig müssen die Scheiben aus Glaskeramik die übrigen Anforderungen an die jeweilige Verwendung erfüllen, beispielsweise thermische, chemische und mechanische Beständigkeit oder Blickdichtheit zur Verhinderung des Einblicks in das Innere des Gegenstandes.

Aus dem Stand der Technik sind beispielsweise transparente volumengefärbte Glaskeramiken als Abdeckplatte für Kochgeräte bekannt. Volumengefärbte Glaskeramikplatten für Kochgeräte enthalten in der Regel Vanadium-Ionen zur Farbgebung, da diese die besondere Eigenschaft besitzen, im Bereich des sichtbaren Lichts zu absorbieren und im Bereich der Infrarotstrahlung eine hohe Transmission aufzuweisen. Eine solche Färbung mittels $V_2O_5$ ist beispielsweise aus der DE 10 2008 050 263 A1 bekannt.

Der Anstieg der Transmission mittels Vanadium volumengefärbter Glaskeramiken beginnt bereits im roten Teil des sichtbaren Spektralbereichs und nicht erst im Nahinfraroten. Deshalb weisen sie für rotes Licht eine um ein Vielfaches höhere Transmission auf, als beispielsweise für blaues Licht. Aufgrund des hohen Marktanteils solcher Glaskeramiken sind auch die meisten Beleuchtungssysteme für Benutzerschnittstellen von Kochgeräten farblich und in der Intensität auf diese Art von Glaskeramik eingestellt.

Im Markt sind mehrere Variante volumengefärbter Glaskeramiken für Kochgeräte erhältlich, die gemäß ihren optischen Eigenschaften in zwei Kategorien eingeteilt werden können.

Die dunkleren Glaskeramikplatten weisen bei einer Dicke von 4 mm einen Lichttransmissionsgrad von ca. 0,5-3 % auf, einen spektralen Transmissionsgrad von ca. 3-7 % bei 630 nm und ca. 0-1,5 % bei 470 nm. Diese verhindern aufgrund des niedrigen Lichttransmissionsgrades effektiv den Einblick in das Kochfeld, sind aber nur mit roten Beleuchtungssystemen effektiv kombinierbar.

Die höheren Glaskeramikplatten weisen bei einer Dicke von 4 mm einen Lichttransmissionsgrad von ca. 3-6 % auf, einen spektralen Transmissionsgrad von ca. 10-15 % bei 630 nm und ca. 1-4 % bei 470 nm. Aufgrund des höheren Lichttransmissionsgrades müssen solche Glaskeramikplatten in der Regel mit opaken Schichten auf der Unterseite versehen werden, um den Einblick in das Kochfeld zu verhindern. Aufgrund der insgesamt höheren Transmission sind sie prinzipiell für die Verwendung mit roten und blauen Beleuchtungssystemen geeignet. Sie sind aber nicht ohne weiteres mit den Beleuchtungssystemen für die dunkleren Glaskeramikplatten kompatibel, da diese zu hell wirken würden und schlimmstenfalls durch eine Blendwirkung die Bediensicherheit reduzieren könnten.

Aus dem Stand der Technik ist weiterhin bekannt, dass solche Glaskeramikplatten mit Farbkompensationsfiltern kombiniert werden können, um auch die Verwendung weißer Beleuchtungssysteme zu ermöglichen. Solche optischen Filter sind aber in der Regel nur bedingt temperaturstabil und verhältnismäßig kostenintensiv.

Aus der DE 20 2018 102 537 U1 und der DE 20 2018 102 534 U1 sind Einrichtungs- und Ausstattungsgegenstände mit neuartigen volumengefärbten Glaskeramiksubstraten bekannt. Aufgrund ihrer geänderten Zusammensetzung und den daraus resultierenden optischen Eigenschaften, sind diese Substrate besonders dazu geeignet, weiße Leuchterscheinungen im Außenbereich eines solchen Gegenstandes zu erzeugen. Die dort aufgeführten Beispiele haben jedoch nur eine geringe Transmission im blauen und roten Spektralbereich und sind deshalb nicht mit beliebigen Beleuchtungssystemen kombinierbar.

Es ist Aufgabe der vorliegenden Erfindung, eine Abdeckplatte für Einrichtungs- oder Ausstattungsgegenstände bereitzustellen, die einen Grundkörper aus Glaskeramik aufweisen, der für die Verwendung von Beleuchtungssystemen unterschiedlicher Lichtfarben, insbesondere rot, blau und weiß, geeignet ist und darüber hinaus für jede Lichtfarbe eine Darstellung in wenigstens zwei mit deutlichem Unterschied wahrnehmbaren Helligkeitsstufen ermöglicht. Gleichzeitig soll die Abdeckplatte mit handelsüblichen Beleuchtungssystemen für herkömmliche, dunkel volumengefärbte Glaskeramikplatten kompatibel sein. Darüber hinaus soll die Abdeckplatte alle weiteren Anforderungen an die Verwendung für den jeweiligen Gegenstand erfüllen. Dazu zählen insbesondere thermische Beständigkeit und Blickdichtheit.

Die Aufgabe wird gelöst durch den Gegenstand der unabhängigen Ansprüche. Spezielle und bevorzugte Ausführungsformen sind in den abhängigen Ansprüchen angegeben.

Die Erfindung betrifft somit eine Abdeckplatte für einen Einrichtungs- oder Ausstattungsgegenstand für eine Küche oder ein Labor mit einem Grundkörper aus transparenter, volumengefärbter Glaskeramik, der bei einer Dicke von 4 mm gekennzeichnet ist durch einen Gesamttransmissionsgrad $\tau_{ges} = \sqrt{T(630nm)^2 + T(470nm)^2}$ mit einem Wert von mindestens 4,9 % und höchstens 8,5 %, wobei T(630nm) der spektrale Lichttransmissionsgrad bei einer Wellenlänge des Lichtes von 630 nm und T(470nm) der spektrale Lichttransmissionsgrad bei einer Wellenlänge des Lichtes von 470 nm ist, und durch ein Verhältnis von T(630nm) zu T(470nm) von mindestens 0,65 und höchstens 2,7, wobei der Farbort von Licht der Normlichtart D65 nach Durchtritt durch den Grundkörper bei einer Dicke von 4 mm innerhalb des Weißbereichs W1 im Chromatizitätsdiagramm CIExyY-2° liegt:

| Weißbereich W1 | |
| --- | --- |
| x | y |
| 0,27 | 0,21 |
| 0,22 | 0,25 |
| 0,32 | 0,37 |
| 0,45 | 0,45 |
| 0,47 | 0,34 |
| 0,36 | 0,29 |

Unter einem Einrichtungs- oder Ausstattungsgegenstand für eine Küche oder ein Labor ist im Sinne der vorliegenden Erfindung allgemein ein Gegenstand zu verstehen, der zur Einrichtung oder Ausstattung einer Küche oder eines Labors geeignet ist. Insbesondere sind dies Küchen- oder Labormöbel oder Küchen- oder Laborgeräte, die vorzugsweise elektrisch betrieben werden, unabhängig von deren konkreter Bauform. Zu Küchen- oder Labormöbeln zählen dabei insbesondere Schränke und Tische, die auf Ihrer Oberseite eine Arbeitsplatte aufweisen. Küchengeräte wie Kochgeräte, Kühlschränke, Mikrowellengeräte, Grills, Backöfen, Dampfgarer, Toaster oder Abzugshauben können dabei sowohl für den privaten als auch für den professionellen Bereich ausgelegt sein. Ebenso kann der Gegenstand ein separat angeordnetes Bedienfeld sein, über das ein Benutzer ein oder mehrere damit ansteuerbare Geräte bedienen kann. Erfindungsgemäße Geräte können beispielsweise in Küchen- oder Labormöbel integrierbar sein oder frei im Raum stehen. Zu den Laborgeräten zählen unter anderem auch Öfen, Klimaschränke, Kühlschränke oder Heizplatten.

Eine Abdeckplatte für einen solchen Einrichtungs- oder Ausstattungsgegenstand muss zwar aufgrund seiner Beschaffenheit zur Verwendung in einem solchen Gegenstand geeignet sein. Die Abdeckplatte ist jedoch nicht auf eine solche Verwendung beschränkt und kann vielmehr auch in einer Vielzahl anderer Anwendungen zum Einsatz kommen, beispielsweise als Kaminsichtscheiben, Brandschutzverglasung oder als Teil mobiler elektronischer Geräte wie Mobiltelefonen oder Tablet-Computern.

Eine Abdeckplatte eines solchen Einrichtungs- oder Ausstattungsgegenstand trennt zumindest Abschnittsweise einen Innenbereich des Gegenstandes von einem Außenbereich ab. Entsprechend weist die Platte eine dem Innenbereich zugewandte Innenseite und eine dem Außenbereich zugewandte Außenseite auf.

Im Falle eins Küchen- oder Laborgeräts kann die Abdeckplatte also zumindest einen Teil des Gehäuses oder gegebenenfalls einer Tür des Geräts darstellen. Ein Beispiel hierfür ist eine Kochplatte, die den Innenbereich eines Kochfeldes, in dem außer einer Anzeigeeinrichtung beispielsweise Heizelemente vorhanden sind, von dessen Außenbereich, in dem sich der Benutzer des Kochfeldes aufhält, abtrennt. Ebenso stellen Sichtfenster in Backofen- oder Mikrowellentüren erfindungsgemäße Abdeckplatten dar. In Küchen- oder Labormöbeln können solche zumindest einen Teil des Korpus des Möbels oder der Front, einer Tür oder einer Schublade darstellen. Besonders bevorzugt stellt die Abdeckplatte einen Teil oder sogar die gesamte Arbeitsplatte eines Küchen- oder Labormöbels dar.

Eine erfindungsgemäße Abdeckplatte weist einen Grundkörper aus transparenter, volumengefärbter Glaskeramik auf. Hierfür können vorzugsweise transparente, volumengefärbte LAS-Glaskeramiken eingesetzt werden, die 0,005 - 0,25 Gew.-% MoOs und vorzugsweise 0 - 0,4 Gew.-% $Nd_2O_3$ und/oder 0 - 0,01 Gew.-% $V_2O_5$ als färbende Komponenten enthalten.

Die Bezeichnung "als färbende Komponente" oder "als Färbemittel" soll dabei zum Ausdruck bringen, dass diese Komponenten einen Einfluss auf die Farbe der resultierenden Glaskeramik haben. Dieser Ausdruck ist aber nicht beschränkend zu verstehen. Diese Komponenten können sich auch auf andere Eigenschaften des Glases bzw. der Glaskeramik auswirken. Dazu gehören beispielsweise die Viskosität in der Schmelze, die Läuterung oder die Entglasungsstabilität.

Ein Mindestgehalt von 0,005 Gew.-% MoOs führt bei dieser bevorzugten Ausführungsform dazu, dass die benötigte Farbwirkung erhalten wird. Wenn eine niedrige Lichttransmission notwendig ist, sind höhere MoOs-Gehalte erforderlich. Ebenso sind bei zunehmenden $Fe_2O_3$- oder $V_2O_5$- Gehalten tendenziell höhere MoOs-Gehalte erforderlich, da sowohl $Fe_2O_3$ als auch $V_2O_5$ die Transmissionscharakteristik der Glaskeramik so verändern, dass der Farbort von Licht der Normlichtart D65 nach Durchtritt durch die Glaskeramik von der Schwarzkörperkurve weg verschoben wird, insbesondere zu roten Farbtönen hin. Dies kann durch das MoOs zumindest teilweise kompensiert werden. Bevorzugt sind zur Einstellung der Farbwirkung mindestens 0,01 Gew.-%, weiter bevorzugt mindestens 0,02 Gew.-% und besonders bevorzugt mindestens 0,03 Gew.-% MoOs enthalten. Da in der Glaskeramik verschiedene Wertigkeiten des Mo-Atoms vertreten sind, sind die angegebene Gehalte der Zusammensetzung analytisch auf diese Verbindung bezogen. Als Obergrenze beträgt der MoOs-Gehalt bevorzugt 0,25 Gew.-%, weiter bevorzugt 0,15 Gew.-%, besonders bevorzugt 0,12 oder sogar 0,10 Gew.-%.

Mit einem Gehalt von 0,005 - 0,25 Gew.-% MoOs ist es möglich, den Lichttransmissionsgrad eines Glaskeramiksubstrats so einzustellen, dass er bei einer Dicke des Substrats von 4 mm einen Wert im Bereich von mindestens 2,5 % bis höchstens 5 % annimmt.

Es hat sich gezeigt, dass die Zugabe von MoOs zusätzlich eine Absenkung der Glasviskosität bewirkt und günstig ist für die Schmelzbarkeit und Läuterung des Glases. Allerdings wirken insbesondere die reduzierten Molybdänoxid-Spezies auch als Keimbildner und können die Entglasungsstabilität verschlechtern. Daher ist es vorteilhaft, den Gehalt zu begrenzen.

Diese Glaskeramiken enthalten vorzugsweise 0 - 0,4 Gew.-% $Nd_2O_3$, besonders bevorzugt 0 - 0,2 Gew.-%, da bei diesem Farboxid die Farbwirkung über schmale Absorptionsbanden im Bereich bei 526, 584 und 748 nm zustande kommt. Licht in diesen Wellenlängenbereich wird beim Durchgang durch die Glaskeramik stärker absorbiert. Insbesondere kann der Gehalt an $Nd_2O_3$ 0 - 0,06 Gew.-% betragen. Besonders bevorzugt wird kein $Nd_2O_3$ eingesetzt und die Glaskeramik ist bis auf unvermeidbare Verunreinigungen technisch frei von $Nd_2O_3$. An Verunreinigungen sind dann in der Regel weniger als 10 ppm enthalten. 1000 ppm entsprechen 0,1 Gew.-%.

Weiterhin ist es vorteilhaft, wenn die Glaskeramik in geringen Mengen $V_2O_5$ enthält. Da $V_2O_5$ schon in sehr geringen Mengen eine Farbortverschiebung bewirkt, kann damit in Kombination mit den oben genannten Bestandteilen MoOs und optional $Nd_2O_3$ eine Feinjustierung des Farborts vorgenommen werden. Dazu kann die Glaskeramik 0 - 0,010 Gew.-%, bevorzugt 0 - 0,008 Gew.-%, besonders bevorzugt 0 - 0,005 Gew.-% $V_2O_5$ enthalten. Bevorzugt enthält die Glaskeramik jedoch bis auf unvermeidliche Verunreinigungen kein $V_2O_5$. Als Verunreinigung liegt $V_2O_5$ typischerweise in Mengen von 1-15 ppm in der Glaskeramik vor.

Besonders bevorzugt enthält die Glaskeramik bis auf unvermeidliche Verunreinigungen weder $Nd_2O_3$ noch $V_2O_5$.

$Fe_2O_3$ kann sich einerseits auf die Färbung der Glaskeramik auswirken. Andererseits kann es sich auch auf das Läuterverhalten der Glasschmelze, insbesondere in Kombination mit $SnO_2$ in Mengen von 0,05 - < 0,7 Gew.-%, auswirken. Deshalb ist es vorzugsweise in Mengen von 0 - 0,25 Gew.-%, weiter bevorzugt 0,03 - 0,2 Gew.-% und besonders bevorzugt 0,06 - 0,15 Gew.-% in der Glaskeramik enthalten.

Insbesondere der Gehalt des färbenden Bestandteils $Cr_2O_3$ beträgt bevorzugt 0 - 0,2 Gew.-%, weiter bevorzugt 0 - 0,01 Gew.-% und besonders bevorzugt 0 - 0,005 Gew.-%. Insbesondere ist die Glaskeramik vorteilhafterweise bis auf die genannten Verunreinigungen frei von $Cr_2O_3$.

Eine bevorzugte Zusammensetzung einer solchen Glaskeramik besteht in Gew.-% auf Oxidbasis im Wesentlichen aus:

| | |
|---|---|
| $Li_2O$ | 2,5 - 5,5 |
| $\Sigma\ Na_2O + K_2O$ | 0,1 - < 4 |
| MgO | 0 - 3 |
| $\Sigma\ CaO + SrO + BaO$ | 0 - 5 |
| ZnO | 0 - 4 |
| $B_2O_3$ | 0 - 3 |
| $Al_2O_3$ | 16 - 26 |
| $SiO_2$ | 58 - 72 |
| $TiO_2$ | 1,5 - 5,5 |
| $ZrO_2$ | 0 - 2,5 |
| $SnO_2$ | 0,05 - < 0,7 |
| $\Sigma\ TiO_2 + ZrO_2 + SnO_2$ | 3 - 6,5 |
| $P_2O_5$ | 0 - 4 |
| $MoO_3$ | 0,005 - 0,25 |
| $Fe_2O_3$ | 0 - 0,25 |
| $Nd_2O_3$ | 0 - 0,4 |
| $Cr_2O_3$ | 0 - 0,2 |
| $MnO_2$ | 0 - 0,5 |
| $V_2O_5$ | 0 - 0,01. |

Eine weiter bevorzugte Zusammensetzung einer solchen Glaskeramik besteht in Gew.-% auf Oxidbasis im Wesentlichen aus:

| | |
|---|---|
| $Li_2O$ | 2,5 - 4,9 |
| $\Sigma\ Na_2O + K_2O$ | 0,1 - < 3 |
| MgO | 0 - 2,8 |
| $\Sigma\ CaO + SrO + BaO$ | 0 - 4 |
| ZnO | 0 - 3 |
| $B_2O_3$ | 0 - 3 |
| $Al_2O_3$ | 18 - 25 |
| $SiO_2$ | 58 - 71 |
| $TiO_2$ | 1,5 - 4,8 |
| $ZrO_2$ | 0 - 2,2 |
| $SnO_2$ | 0,05 - < 0,6 |
| $\Sigma\ TiO_2 + ZrO_2 + SnO_2$ | 3,5 - 6,5 |
| $P_2O_5$ | 0 - 4 |
| $MoO_s$ | 0,01 - 0,15 |
| $Fe_2O_3$ | 0,06 - 0,15 |
| $Nd_2O_3$ | 0 - 0,2 |
| $Cr_2O_3$ | 0 - 0,01 |
| $MnO_2$ | 0 - 0,1 |
| $V_2O_5$ | 0 - 0,008. |

Eine besonders bevorzugte Zusammensetzung einer solchen Glaskeramik besteht in Gew.-% auf Oxidbasis im Wesentlichen aus:

| | |
|---|---|
| $Li_2O$ | 2,5 - 4,9 |
| $\Sigma\ Na_2O + K_2O$ | 0,1 - < 3 |
| $MgO$ | 0 - 2,8 |
| $\Sigma\ CaO + SrO + BaO$ | 0 - 4 |
| $ZnO$ | 0 - 3 |
| $B_2O_3$ | 0 - 3 |
| $Al_2O_3$ | 18 - 25 |
| $SiO_2$ | 58 - 71 |
| $TiO_2$ | 1,5 - 4,8 |
| $ZrO_2$ | 0 - 2,2 |
| $SnO_2$ | 0,05 - < 0,6 |
| $\Sigma\ TiO_2 + ZrO_2 + SnO_2$ | 3,5 - 6,5 |
| $P_2O_5$ | 0 - 4 |
| $MoO_3$ | 0,02 - 0,12 |
| $Fe_2O_3$ | 0,03 - 0,2 |
| $Nd_2O_3$ | 0 - 0,06 |
| $Cr_2O_3$ | 0 - 0,005 |
| $MnO_2$ | 0 - 0,1 |
| $V_2O_5$ | 0 - 0,005. |

Der Begriff "besteht im Wesentlichen aus" bedeutet, dass die aufgeführten Komponenten wenigstens 96 % in der Regel wenigstens 98 % der Gesamtzusammensetzung betragen sollen. Diese Glaskeramiken enthalten optional Zusätze chemischer Läutermittel wie $As_2O_3$, $Sb_2O_3$, $CeO_2$ und von Läuterzusätzen wie Manganoxid, Sulfat-, Halogenid-Verbindungen (F, Cl, Br) in Gesamtgehalten bis zu 2,0 Gew.-%.

Verbindungen einer Vielzahl von Elementen wie z. B. den Alkalien Rb, Cs oder Elementen wie Mn, Hf sind bei großtechnisch verwendeten Gemengerohstoffen übliche Verunreinigungen. Andere Verbindungen wie z.B. solche der Elemente B, Cl, F, W, Nb, Ta, Y, Seltene Erden, Bi, Co, Cu, Cr, Ni können ebenfalls als Verunreinigung großtechnisch verwendeter Gemengerohstoffe, typischerweise im ppm-Bereich, enthalten sein.

Färbende Bestandteile wie CoO, CuO oder NiO können enthalten sein, sofern sie sich nicht negativ auf die Färbung der Glaskeramik auswirken. Deshalb enthält die Glaskeramik vorzugsweise 0 - 250 ppm, vorzugsweise 0 - 100 ppm, besonders bevorzugt 0 - 50 ppm CoO und 0 - 250 ppm, vorzugsweise 0 - 100 ppm, besonders bevorzugt 0 - 50 ppm CuO und 0 - 250 ppm, vorzugsweise 0 - 100 ppm, besonders bevorzugt 0 - 50 ppm NiO. Weiterbevorzugt enthält die Glaskeramik bis auf unvermeidliche Verunreinigungen weder CoO noch CuO noch NiO. Typische Verunreinigungen für diese Bestandteile liegen im einstelligen ppm-Bereich.

Aus Gründen des Umwelt- und des Arbeitsschutzes wird auf den Einsatz von giftigen oder bedenklichen Rohstoffen nach Möglichkeit verzichtet. Daher ist die Glaskeramik vorzugsweise frei von umweltschädlichen Stoffen wie Arsen (As), Antimon (Sb), Cadmium (Cd), Blei (Pb), Caesium (Cs), Rubidium (Rb) Halogeniden und Schwefel (S), abgesehen von unvermeidbaren Verunreinigungen im Bereich von bevorzugt 0 bis kleiner 0,5 Gewichtsprozent, besonders bevorzugt kleiner 0,1 Gewichtsprozent, ganz besonders bevorzugt kleiner 0,05 Gewichtsprozent. Die Angaben in Gewichtsprozent beziehen sich dabei ebenfalls auf die Glaszusammensetzung auf Oxidbasis.

Allgemein können entweder natürlich vorkommende Rohstoffe oder chemisch aufbereitete beziehungsweise synthetisch hergestellte Rohstoffe für die Herstellung verwendet werden. Natürlich vorkommende Rohstoffe sind in der Regel kostengünstiger als äquivalente chemisch aufbereitete oder synthetisierte Rohstoffe. Die Verwendbarkeit natürlicher Rohstoffe ist allerdings durch die üblicherweise hohen Mengen an Verunreinigungen beschränkt. Beispiele für natürlich vorkommende Rohstoffe sind Quarzsand, Spodumen und Petalit. Chemisch aufbereitete oder synthetisch hergestellte Rohstoffe enthalten in der Regel nur sehr wenige Verunreinigungen. Beispiele für gebräuchliche aufbereitete oder synthetisierte Rohstoffe sind Lithiumcarbonat oder Titandioxid-Pulver.

Die Verunreinigungen durch typische Spurenelemente bei den verwendeten technischen Rohstoffen liegen üblicherweise bei 200 ppm $B_2O_3$, 30 ppm Cl, 1 ppm CoO, 3 ppm $Cr_2O_3$, 200 ppm $Cs_2O$, 3 ppm CuO, 200 ppm F, 400 ppm $HfO_2$, 3 ppm NiO, 500 ppm $Rb_2O$, 5 ppm $V_2O_5$.

Die erfindungsgemäße Abdeckplatte muss die aufgeführten Eigenschaften zumindest bei einer Dicke von 4 mm aufweisen. Diese Dicke hat sich zu einem de facto Standard für viele Anwendungen wie Kochfelder, Kaminsichtscheiben oder Backofentüren entwickelt und ist deshalb von äußerster wirtschaftlicher Bedeutung. Abdeckplatten, die die Anforderungen bei einer Dicke von 4 mm nicht erfüllen, sind für die Erfindung nicht geeignet.

Um den erwähnten komplexen Anforderungen an moderne Beleuchtungssystemen gerecht zu werden, muss der Grundkörper der Abdeckplatte eine Vielzahl von Anforderungen erfüllen. Der Grundkörper weist einen Lichttransmissionsgrad gemessen nach DIN EN 410, sowie spektrale Transmissionsgrade bei jeder Wellenlänge, also insbesondere den spektralen Lichttransmissionsgrad T(630nm) bei einer Wellenlänge des Lichtes von 630 nm und den spektralen Lichttransmissionsgrad T(470nm) bei einer Wellenlänge des Lichtes von 470 nm auf. Aus diesen beiden spektralen Lichttransmissionsgraden kann der spektrale Gesamttransmissionsgrad $\tau_{ges}= \sqrt{T(630nm)^2 + T(470nm)^2}$ berechnet werden.

Der Grundkörper besteht aus transparenter Glaskeramik, also aus Glaskeramik mit vernachlässigbarer Streuung für sichtbares Licht. Deshalb ist es für das Messergebnis unerheblich, ob für die Messung der Transmission eine Ulbrichtkugel eingesetzt wird, oder nur unter einem Beobachtungswinkel von 2° gemessen wird. Der diffus transmittierte Anteil ist gegenüber dem direkt transmittierten Anteil vernachlässigbar klein. Die Messwerte für den Lichttransmissionsgrad des Grundkörpers gemessen mit und ohne Ulbrichtkugel unterscheiden sich also höchstens um 10 %, vorzugsweise um höchstens 1 % oder sogar um weniger als 0,5 % bezogen auf den Messwert mit Ulbrichtkugel.

Der erfindungsgemäße Grundkörper weist einen Gesamttransmissionsgrad $\tau_{ges}= \sqrt{T(630nm)^2 + T(470nm)^2}$ von mindestens 4,9 % und höchstens 8,5 % und ein Verhältnis von T(630nm) zu T(470nm) bei mindestens 0,65 und höchstens 2,7 auf. Dadurch wird er den oben genannten Anforderungen gerecht.

Ein Gesamttransmissionsgrad von mindestens 4,9 %, vorzugsweise mindestens 5,5 % stellt sicher, dass die Transmission für blaues und/oder für rotes Licht ausreichend hoch ist, um blaue und/oder rote Leuchtanzeigen mit der Abdeckplatte verwenden zu können. Gleichzeitig gewährleistet ein Gesamttransmissionsgrad von höchstens 8,5 %, vorzugsweise von höchstens 7,5 %, dass weder die Transmission für rotes noch die für blaues Licht übermäßig hoch sind, so dass keine Blendwirkung durch zu helle Leuchtanzeigen resultieren kann. Im besonders bevorzugten Bereich von mindestens 5,5 % bis höchstens 7,5 % wird dieser Effekt einer ausreichenden aber nicht zu hohen Transmission besonders gut erreicht.

Bei einem Verhältnis von T(630nm) zu T(470nm) von mindestens 0,65, vorzugsweise mindestens 0,9, ist durch die Kombination mit dem erforderlichen Gesamttransmissionsgrad sichergestellt, dass die Abdeckplatte eine ausreichende Transmission für rotes Licht aufweist. Aus dem Gesamttransmissionsgrad ergibt sich unmittelbar, dass bei einem Verhältnis von 0,65 der spektrale Transmissionsgrad bei 630 nm mindestens 2,7 % und höchstens 4,6 % beträgt. Gleichzeitig ist dadurch sichergestellt, dass der spektrale Transmissionsgrad bei 470 nm bei einem Verhältnis von 0,65 mindestens 4,1 % und höchstens 7,1 % beträgt. Bei einem Verhältnis von weniger als 0,65 wäre also keine ausreichende spektrale Transmission für rotes Licht gewährleistet. Die rote Transmission ist aber gerade für die Verwendung handelsüblicher roter Leuchtelemente besonders wichtig.

Bei einem Verhältnis von T(630nm) zu T(470nm) von höchstens 2,7, vorzugsweise höchstens 2,4 besonders bevorzugt höchstens 2, ist entsprechend durch die Kombination mit dem erforderlichen Gesamttransmissionsgrad sichergestellt, dass die Abdeckplatte eine ausreichende Transmission für blaues Licht aufweist. So ergibt sich bei dem niedrigsten Wert des Gesamttransmissionsgrades unmittelbar, dass bei einem Verhältnis von 2,7 der spektrale Transmissionsgrad bei 470 nm mindestens 1,7 % betragen muss. Gleichzeitig ist dadurch sichergestellt, dass der spektrale Transmissionsgrad bei 630 nm beim Höchstwert des Gesamttransmissionsgrades höchstens 8,0 % beträgt und somit eine ausreichende Blickdichtheit gewährleistet ist.

In einer bevorzugten Ausführungsform weist der Grundkörper aus Glaskeramik zusätzlich einen Lichttransmissionsgrad zwischen 2,5 % und 5,0 % auf. Ein Lichttransmissionsgrad des Grundkörpers von mindestens 2,5 %, vorzugsweise von mindestens 3,0 %, gewährleistet eine ausreichend helle Transmission von weißem Licht, dass von einem Beleuchtungssystem ausgesendet und durch die Abdeckplatte transmittiert wird. Ein Lichttransmissionsgrad von höchstens 5,0 %, vorzugsweise von höchstens 4,0 %, verbessert die Blickdichtheit der Abdeckplatte weiter.

Grundkörper gemäß dieser Ausführungsform weisen besonders ausgeglichene optische Eigenschaften auf. Sie reduzieren aufgrund des niedrigen Lichttransmissionsgrades die Durchsicht in vorteilhafter Weise. Gleichzeitig erlauben Sie die Darstellung farbiger Anzeigen sowohl für blaues, rotes als auch für weißes Licht. Darüber hinaus sind sie mit roten Anzeigen kompatibel, deren Helligkeit für herkömmliche Glaskeramiken optimiert wurde. Außerdem können mit solchen Glaskeramiken blaue Anzeigen realisiert werden, die doppelt so hell sind, wie die von aus dem Stand der Technik bekannten Glaskeramiken mit Farbkompensationsfilter. Dadurch sind auch blaue Anzeigen möglich, die unterschiedliche Helligkeitsstufen verwenden, beispielsweise dunkler für deaktiviert und heller für aktiviert. Mittels solcher mehrstufigen Anzeigen kann die Bedienung eines Geräts vereinfacht und somit die Bediensicherheit verbessert werden. Dies war bislang nicht möglich, da der spektrale Transmissionsgrad für blaues Licht von herkömmlichen Glaskeramiken mit Farbkompensationsfilter hierfür zu niedrig war.

Gemäß der Erfindung liegt der Farbort von Licht der Normlichtart D65 nach Durchtritt durch den Grundkörper innerhalb des Weißbereichs W1 im Chromatizitätsdiagramm CIExyY-2°:

| Weißbereich W1 | |
|---|---|
| x | y |
| 0,27 | 0,21 |
| 0,22 | 0,25 |
| 0,32 | 0,37 |
| 0,45 | 0,45 |
| 0,47 | 0,34 |
| 0,36 | 0,29 |

Der Weißbereich W1 ergibt sich dabei als ein Bereich entlang der Schwarzkörperkurve im CIExyY-Farbraum, der von ca. 2.750 K bis ca. 1.000.000 K Farbtemperatur reicht und an der oberen Grenze um einen Wert von ca. y = 0,04 gegenüber der Schwarzkörperkurve nach oben und an der unteren Grenze um ca. y = 0,07 nach unten verschoben ist. Hieraus ergibt sich der folgende Effekt: Licht der Normlichtart D65 hat per Definition eine Farbtemperatur von ca. 6500 K und bei direkter Betrachtung mit einem 2° Beobachter einen Farbort von x = 0,31 und y = 0,33. Mit der vorliegenden Erfindung kann also bei Durchtritt von weißem Licht durch den Grundkörper der Farbort des Lichtes im Wesentlichen entlang der Schwarzkörperkurve, sowohl zu höheren als auch zu niedrigeren Farbtemperaturen verschoben werden, ohne einen unerwünschten Farbstich zu erzeugen. Weißes Licht wird also nach dem Durchtritt immer noch als weißes Licht wahrgenommen.

Der Farbort von Licht nach Durchtritt durch den Grundkörper kann beispielsweise mit dem Farbmessgerät CS-150 von Konica Minolta gemessen werden. Ebenso ist es möglich das Transmissionsspektrum der Abdeckplatte zu messen und damit und mit Hilfe des bekannten Spektrums von D65-Normlicht und der Augenempfindlichkeit eines 2°-Normalbeobachters entsprechend der Vorgaben des CIE den Farbort zu berechnen.

In einer bevorzugten Ausführungsform ist die Abdeckplatte dadurch gekennzeichnet, dass der Farbort von Licht der Normlichtart D65 nach Durchtritt durch den Grundkörper innerhalb eines Weißbereichs W2 liegt, der im Chromatizitätsdiagramm CIExyY-2° durch die folgenden Koordinaten bestimmt ist:

| Weißbereich W2 | |
|---|---|
| x | y |
| 0,25 | 0,27 |
| 0,32 | 0,36 |
| 0,41 | 0,42 |
| 0,42 | 0,36 |
| 0,35 | 0,31 |
| 0,27 | 0,24 |

Der Weißbereich W2 ergibt sich dabei als ein Bereich entlang der Schwarzkörperkurve im CIExyY-Farbraum, der von ca. 3.500 K bis ca. 20.000 K Farbtemperatur reicht und an der oberen Grenze um einen Wert von ca. y = 0,025 gegenüber der Schwarzkörperkurve nach oben und an der unteren Grenze um ca. y = 0,04 nach unten verschoben ist. Dieser Bereich erstreckt sich im Vergleich zu W1 also entlang eines kürzeren Abschnitts der Schwarzkörperkurve und weist eine geringere Abweichung in den x- und y-Koordinaten von der Schwarzkörperkurve auf.

Dieser Abschnitt der Schwarzkörperkurve von 3.500 K bis 20.000 K entspricht dabei den Farborten, die von natürlichem Sonnenlicht abgedeckt werden können. Eine Abendsonne kurz vor Beginn der Dämmerung entspricht einem Schwarzkörperstrahler mit ca. 3.500 K, ein klarer Himmel zur Mittagszeit entspricht einem Schwarzkörperstrahler mit ca. 20.000 K. Farborte auf oder in der Nähe der Schwarzkörperkurve werden insbesondere in diesem Bereich deshalb als Weiß und besonders natürlich wahrgenommen.

Besonders bevorzugt ist die Abdeckplatte dadurch gekennzeichnet, dass der Farbort von Licht der Normlichtart D65 nach Durchtritt durch den Grundkörper innerhalb eines Weißbereichs W3 liegt.

| Weißbereich W3 | |
|---|---|
| x | y |
| 0,250 | 0,270 |
| 0,290 | 0,320 |
| 0,340 | 0,370 |
| 0,360 | 0,320 |
| 0,310 | 0,280 |
| 0,270 | 0,240 |

Der Weißbereich W3 erstreckt sich entlang der Schwarzkörperkurve im CIExyY-Farbraum von ca. 5.000 K bis ca. 20.000 K Farbtemperatur und ist an der oberen Grenze um einen Wert von ca. y = 0,025 gegenüber der Schwarzkörperkurve nach oben und an der unteren Grenze um ca. y = 0,04 nach unten verschoben. Der Weißbereich W3 entspricht also im Wesentlichen dem Bereich W2, beginnt aber erst bei einer Farbtemperatur von 5.000 K. Dieser Farbbereich entspricht Tageslichtweiß und wird vom menschlichen Beobachter entsprechend als besonders reines Weiß, insbesondere als Kaltweiß, wahrgenommen.

Dies gelingt mit der vorliegenden Erfindung überraschender Weise auch ohne die Verwendung eines Schwarzkörperkompensationsfilters zum Ausgleich des Transmissionsverlaufs der Abdeckplatte. Unter einem Schwarzkörperkompensationsfilter wird dabei im Sinne der vorliegenden Erfindung ein optischer Filter verstanden, dessen Transmissionsspektrum so auf das Transmissionsspektrum der Abdeckplatte abgestimmt ist, dass Licht der Normlichtart D65 nach Durchtritt durch den Schwarzkörperkompensationsfilter und die Abdeckplatte einen Farbort mit Koordinaten innerhalb des Weißbereichs W1, W2 oder gegebenenfalls W3 aufweist.

Erfindungsgemäß ist ein solcher Filter nicht notwendig, da Licht der Normlichtart D65 nach Durchtritt durch den Grundkörper bereits einen Farbort in diesem Bereich aufweist. Ein derartiger Filter kann in einer optionalen Weiterbildung der Erfindung dennoch zwischen der Abdeckplatte und einem Leuchtelement angeordnet sein, beispielsweise, wenn verschiedene Bereiche der Abdeckplatte für transmittiertes Licht der Normlichtart D65 unterschiedliche Farborte innerhalb eines der Bereiche W1, W2 oder W3 erzeugen sollen. Alternativ kann ein solcher Filter beispielsweise vorgesehen sein, um die üblichen Produktionsschwankung des Farbortes von Leuchtmitteln auszugleichen. Somit wird eine farblich besonders homogene Darstellung von Leuchtanzeigen ermöglicht.

Auch andere Farbfilter sind denkbar, beispielsweise, um bei Verwendung von Leuchtelementen, die weißes Licht emittieren, Leuchterscheinungen außerhalb des Weißbereichs W1 zu erzeugen. So kann beispielsweise im Innenbereich des Gegenstandes emittiertes weißes Licht für einen Beobachter im Außenbereich farbig, beispielsweise blau, rot, grün oder mit einer praktisch beliebigen anderen Farbe, erzeugt werden.

Sowohl Schwarzkörperkompensationsfilter als auch Farbfilter können beispielsweise in Form aufgedruckter oder aufgetragener Schichten oder angedrückter oder aufkaschierter Folien oder Platten vorliegen. Filter in Form von Schichten können mittels üblicher Verfahren hergestellt werden. Dazu zählen beispielsweise Drucken, insbesondere Sieb-, Flexo- und Tintenstrahldruck, Schlitzdüsen-Beschichtung, Rakeln und Vakuumbeschichtungsverfahren, insbesondere Plasma-CVD und Sputtern. Filter können entweder unmittelbar auf die Abdeckplatte aufkaschiert, -gedruckt oder - getragen werden, oder mittelbar auf einen Träger wie eine Folie oder Platte, der dann zwischen Leuchtmittel und Abdeckplatte angeordnet wird.

In einer bevorzugten Ausführungsform weißt die Abdeckplatte ein Mittel zur Reduktion des Lichttransmissionsgrades auf. Ein solches Mittel kann insbesondere eine auf den Grundkörper aufgebrachte Beschichtung, eine aufgeklebte oder angedrückte Folie oder eine aufgeklebte oder angedrückte Platte sein. Besonders bevorzugt ist ein solches Mittel bei bestimmungsgemäßen Gebrauch auf der vom Betrachter abgewandten Seite der Abdeckplatte angeordnet.

Ein solches Mittel zur Reduktion des Lichttransmissionsgrades weist zusammen mit dem Grundkörper einen Lichttransmissionsgrad von weniger als 2,5 %, bevorzugt weniger als 0,1 %, besonders bevorzugt weniger als 0,01 % oder sogar von weniger als 0,001 % auf. Beispielsweise bei Ausgestaltung der Mittel als Metallfolie mit einer Dicke von wenigstens 100 $\mu$m können auch Lichttransmissionsgrade von deutlich weniger als 0,001 % erzielt werden.

Ein solches Mittel bewirkt insbesondere bei Grundkörpern mit hohem Lichttransmissionsgrad, dass die Durchsicht durch die Abdeckplatte weiter reduziert ist. Dadurch kann beispielsweise die Sichtbarkeit von Bauteilen oder Elementen innerhalb des Einrichtungs- oder Ausstattungsgegenstandes in vorteilhafter Weise reduziert sein.

Vorzugsweise ist eine solches Mittel schwarz gefärbt oder zusätzlich mit einer schwarzen Beschichtung beschichtet. Dies hat den Vorteil, dass es bei Durchsicht durch den Grundkörper optisch noch unauffälliger ist.

Ein solches Mittel zur Reduktion des Lichttransmissionsgrades weist in jedem Fall zumindest eine Aussparung auf, durch die Licht hindurchtreten kann. Eine solche Aussparung kann beispielsweise ein Fenster für eine Leuchtanzeige bilden. Alternativ kann eine solche Aussparung beispielsweise in Form eines Symbols, Zeichens, Buchstabens oder einer Zahl vorliegen. Bei Hinterleuchtung einer solchen Aussparung mit einem Leuchtelement resultiert dann, dass vom Benutzer beispielsweise ein leuchtendes Symbol wahrgenommen wird, dass nicht oder nur schwach wahrnehmbar ist, wenn das Leuchtelement ausgeschaltet ist. Dadurch wird die Betriebssicherheit verbessert, da der Nutzer stets nur aktivierte Zeichen und Symbole wahrnehmen kann und somit keine Verwechslungsgefahr mit nicht aktivierten Zeichen oder Symbolen besteht.

Eine solche Aussparung kann entweder von vornherein nicht mit einer Beschichtung versehen werden oder es kann eine Beschichtung an dieser Stelle nachträglich wieder abgetragen werden. Bei Verwendung von Folien oder Platten kann eine Aussparung beispielsweise durch Ausschneiden der entsprechenden Teile der Folie oder Platte erzeugt werden.

Abgesehen von Aussparungen, kann ein Mittel zur Reduktion des Lichttransmissionsgrades vollflächig oder nur an Teilflächen des Abdeckmittels angeordnet sein. Zur Erzielung einer besonders hohen Reduktion des Lichttransmissionsgrades können auch mehrere dieser Mittel unmittelbar oder mittelbar hintereinander angeordnet sein. Bei einer solchen Anordnung müssen aber die Aussparungen in den jeweiligen Mitteln zumindest teilweise überlappen.

In einer weiteren bevorzugten Ausführungsform weißt die Abdeckplatte wenigstens einen Diffusor auf. Ein Diffusor ist bei bestimmungsgemäßen Gebrauch auf der vom Betrachter abgewandten Seite der Abdeckplatte angeordnet. Unter einem Diffusor ist dabei ein Mittel zu verstehen, dass einen Lichttransmissionsgrad von wenigstens 10 % hat und aufgrund seiner Struktur dazu geeignet ist gerichtetes Licht, das durch den Diffusor hindurchtritt, durch optische Streuung zumindest anteilig in diffuses Licht umzuwandeln.

Diffusoren können beispielsweise in Form von Beschichtungen, Folien oder Platten vorliegen. Die Streuung des Lichts kann beispielsweise von Partikeln geeigneter Größe, die in der Beschichtung, Folie oder Platte enthalten sind, verursacht werden. Solche Partikel können beispielsweise eine Größe aufweisen, die in der Größenordnung der Wellenlänge von sichtbarem Licht liegt. Weiterhin weisen solche Partikel einen Brechungsindex auf, der sich vom Brechungsindex der sie umgebenden Beschichtung, Folie oder Platte unterscheidet. Solche Partikel können beispielsweise aus $TiO_2$ bestehen oder dieses enthalten. Besonders bevorzugt liegen die Partikel in der Beschichtung, Folie oder Platte räumlich homogen verteilt vor.

Alternativ kann die Streuwirkung eines Diffusors beispielsweise auch über einen Bereich mit ausreichend hoher Rauheit der Oberfläche der Abdeckplatte, einer Beschichtung, einer Folie oder einer Platte erzielt werden. Eine Oberfläche mit hoher Rauheit kann beispielsweise mittels abrasiver Verfahren wie Sandstrahlen oder über Ätzprozesse hergestellt werden. Unter einer ausreichend hohen Rauheit ist dabei eine mittlere Rauheit $R_a$ zwischen 100 nm und 10 $\mu$m, vorzugsweise zwischen 200 nm und 2 $\mu$m, besonders bevorzugt zwischen 500 nm und 1 $\mu$m, zu verstehen.

Ein solcher Diffusor bewirkt, dass Licht eines Leuchtelements, dass auf den Diffusor gerichtet ist, auf der dem Betrachter zugewandten Seite der Abdeckplatte eine optisch ansprechende, homogene Leuchterscheinung erzeugt. Dies gilt insbesondere für Leuchtelemente mit punktförmigen Leuchtmitteln wie LEDs.

Ein Diffusor kann auch insbesondere im Bereich der Aussparung eines Mittels zur Reduktion des Lichttransmissionsgrades angeordnet sein. Dort kann er teilweise oder vollständig mit der Aussparung überlappen. Dies hat den Vorteil, dass die Aussparung bei Durchleuchtung mit einem Leuchtelement besonders homogen ausgeleuchtet werden kann.

Bei Kombination eines Diffusors mit einem Mittel zur Reduktion des Lichttransmissionsgrades, kann der Diffusor beispielsweise zwischen dem Grundkörper und dem Mittel, zwischen dem Mittel und einem Leuchtelement oder zwischen zwei Mitteln zur Reduktion des Lichttransmissionsgrades angeordnet sein. Dabei kann er jeweils auch mit dem oder den Mitteln zur Reduktion überlappen. Bei der Anordnung zwischen zwei Mitteln zur Reduktion, müssen beide Mittel überlappende Aussparungen aufweisen und der Diffusor muss zumindest teilweise im Bereich der Überlappung angeordnet sein.

Das Abdeckmittel kann auf dem Grundkörper weitere Beschichtungen aufweisen. Dazu zählen beispielsweise dekorative Beschichtungen, Kratzschutzschichten, Entspiegelungsschichten, Verspiegelungsschichten, elektrisch leitfähigen Schichten, Schichten zur Erhöhung der Reflexion im Infraroten, Schichten zur Verbesserung der Reinigbarkeit, Anti-Glare-Schichten, Anti-Fingerprint-Schichten, Antimikrobielle-Schichten oder Kombinationen davon. Solche Schichten können je nach Ausführung auf einer oder auf beiden Seiten des Grundkörpers vollflächig oder auf Teilflächen angeordnet sein. Bei solchen Beschichtungen kann es sich entweder um einzelne Schichten, oder um Stapel mehrerer über- oder hintereinander angeordneter Schichten handeln.

Einrichtungs- und Ausstattungsgegenstände, die eine erfindungsgemäße Abdeckplatte aufweisen, können eine Vielzahl unterschiedlicher Beleuchtungssysteme aufweisen. Solche Beleuchtungssysteme können beispielsweise zur dekorativen Beleuchtung oder zur Erzeugung von Leuchtanzeigen zum Einsatz kommen. Dabei können sie auf eine Vielzahl unterschiedlicher lichttechnischer Lösungen zurückgreifen. Sie können beispielsweise LEDs, OLEDs, Laserdioden, Projektoren, Lichtleiter, pixelbasierte Anzeigen, insbesondere LCD oder AM-OLED, Segmentanzeigen, insbesondere 7-Segment-Anzeigen und/oder punktförmige, linienförmige oder flächige Leuchtelemente aufweisen. Die Beleuchtungssysteme können eine einzelne unveränderbare Lichtfarbe aufweisen. Sie können aber auch veränderbare Lichtfarben, Mischfarben aus Licht unterschiedlicher Farben oder spektral breite Lichtemission, insbesondere weißes Licht, aussenden.

Die Erfindung wird nachfolgend unter Bezugnahme auf die Abbildungen näher erläutert.

Fig. 1 zeigt ein Diagramm mit einer Auftragung der optischen Eigenschaften von Grundkörpern aus Glaskeramik für erfindungsgemäße Abdeckplatten und Vergleichsbeispiele V1 und V2.

Fig. 2a zeigt die Farbkoordinaten von Licht der Normlichtart D65 nach Durchtritt durch eine Glaskeramik der Beispiele B1 - B4 sowie die Lage der Weißbereiche W1, W2 und W3 in einem CIE-Chromatizitätsdiagramm im CIExyY Farbraum.

Fig. 2b zeigt einen vergrößerten Ausschnitt aus Fig. 2a.

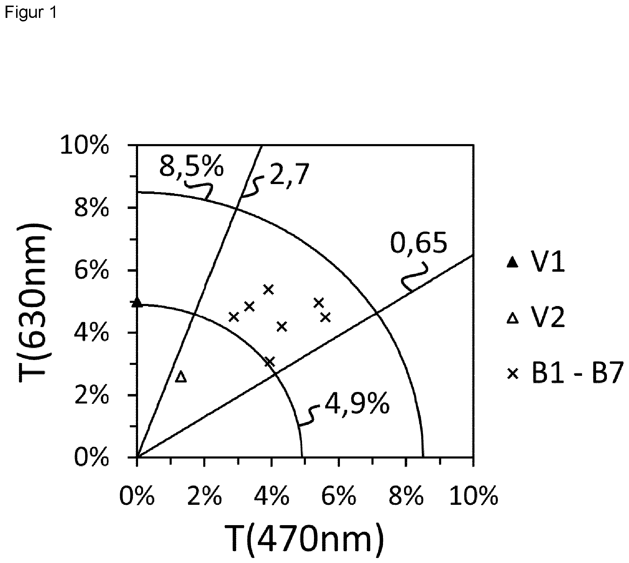

In Fig. 1 ist auf der x-Achse der spektrale Transmissionsgrad des Grundkörpers bei einer Wellenlänge von 470 nm, also T(470nm), aufgetragen. Auf der y-Achse ist der spektrale Transmissionsgrad des Grundkörpers bei einer Wellenlänge von 630 nm, also T(630nm), aufgetragen.

Das Diagramm enthält zwei Ursprungsgeraden, die mit den Werten ihrer Steigung, nämlich 0,65 und 2,7, beschriftet sind. Diese Geraden markieren die erfindungsgemäßen Grenzwerte für das Verhältnis von T(630nm) zu T(470nm).

Weiterhin enthält das Diagramm zwei Kreissegmente mit den Beschriftungen 4,9 %, und 8,5 %. Diese Kreissegmente markieren die erfindungsgemäßen Grenzwerte für den Gesamttransmissionsgrad.

Der erfindungsgemäße Transmissionsbereich des Grundkörpers mit einem Gesamttransmissionsgrad von mindestens 4,9 % und höchstens 8,5 % sowie einem Verhältnis von T(630nm) zu T(470nm) bei mindestens 0,65 und höchstens 2,7 ist in Fig. 1 demnach als das Kreisringsegment zwischen den Geraden mit Steigung 0,65 und 2,7 und den Kreissegmenten mit 4,9 % und 8,5 % dargestellt. Die bevorzugten Bereiche sind aus Gründen der Übersichtlichkeit nicht dargestellt.

Alle in Fig. 1 dargestellten Beispiele oder Vergleichsbeispiele sind für eine Dicke von 4 mm gezeigt.

Fig. 1 zeigt verschiedene Beispiele für Grundkörper aus dem Stand der Technik. Das Vergleichsbeispiel V1 ist mit einem schwarzen, ausgefüllten Dreieck dargestellt. Dabei handelt es sich um eine am Markt erhältliche dunkel eingefärbte Glaskeramik. Diese Glaskeramik hat eine ausreichende Transmission für rotes Licht (T(630nm) ~ 4,9%), lässt aber praktisch kein blaues Licht durch (T(470nm) ~ 0%). Sie ist geeignet für die Verwendung handelsüblicher roter Leuchtanzeigen. Sie ist nicht geeignet für blaue Leuchtanzeigen.

Das Vergleichsbeispiel V2 ist mit einem schwarzen Dreieck mit weißer Füllung dargestellt. Bei diesem Beispiel handelt es sich um eine ebenfalls am Markt erhältliche hellere Glaskeramikplatte, die aus den oben genannten Gründen einen Farbkompensationsfilter aufweist. Aufgrund der Verwendung des Farbfilters, ist sie auf insgesamt niedrigem Niveau annähernd gleichermaßen transparent für blaue (T(470nm) ~ 1,2 %) wie für rote Anzeigen (T(630nm) ~ 2,6 %). Aufgrund des niedrigen Gesamttransmissionsgrades erfordert eine solche Glaskeramik leistungsstärkere Leuchtmittel für Leuchtanzeigen, als Abdeckplatten, die mit einer Glaskeramik mit den erfinderischen Eigenschaften hergestellt ist. Leistungsstärkere Leuchtmittel sind jedoch in Anschaffung und Betrieb teurer. Ebenso ist die Verwendung eines Farbkompensationsfilters teuer, da hierfür nur spezielle temperaturbeständige Filtermaterialien zum Einsatz kommen können.

In Fig. 1 sind die erfindungsgemäßen Beispiele B1 bis B7 mit dem Zeichen "X" dargestellt. Diese Beispiele werden unten näher erläutert. Sie weisen einen Gesamttransmissionsgrad zwischen 4,9 % und 8,5 % und ein Verhältnis T(630 nm) zu T (470nm) von mehr als 0,65, aber weniger als 2,7 auf.

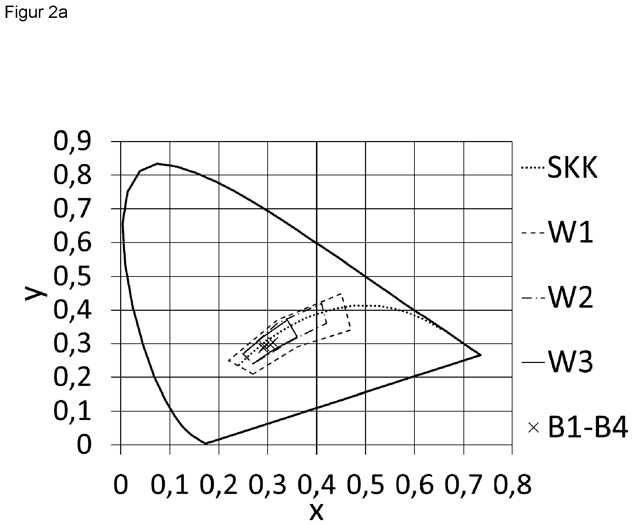

Fig. 2a zeigt die Farbkoordinaten von Licht der Normlichtart D65 nach Durchtritt durch eine Glaskeramik der Beispiele B1 - B4 sowie die Lage der Weißbereiche W1, W2 und W3 in einem CIE-Chromatizitätsdiagramm im CIExyY Farbraum (1931, 2°). Aufgetragen sind die x und y Koordinaten von Licht der Normlichtart D65 nach Durchtritt durch eine 4 mm dicke Probe der Beispiele B1 - B4. Ebenfalls dargestellt ist der Verlauf der Schwarzkörperkurve "SKK". Die Schwarzkörperkurve zeigt den Farbort des von einem Schwarzkörperstrahler emittierten Lichtes bei unterschiedlichen Temperaturen des Strahlers. Da die Sonne ein Schwarzkörperstrahler ist, wird Licht, dessen Farbort auf der SKK liegt, als besonders weiß, natürlich und angenehm empfunden.

Licht der Normlichtart D 65 liegt bei den Farbkoordinaten x = 0,31, y = 0,33. Bei Durchtritt von Normlicht D65 durch eine absorbierende Glaskeramik kann sich der Farbort des Lichts durch die Absorption der Glaskeramik verschieben.

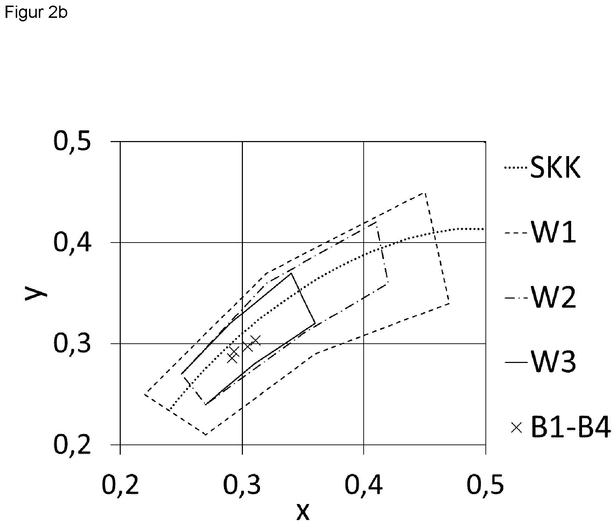

Zur deutlicheren Darstellung zeigt Fig. 2b einen vergrößerten Ausschnitt aus Fig. 2a. Bei allen Beispielen B1-B4 wird der Farbort von Licht der Normlichtart D65 bei Durchtritt durch eine entsprechende Probe nur minimal entlang der SKK verschoben. Die Verschiebung erfolgt für alle Beispiele in Richtung von kaltweißem Licht, also zu niedrigeren x- und y-Werten. Für alle Beispiele liegt der Farbort in den Bereichen W1, W2 und W3.

Anhand der Tabellen 1 und 2 werden die erfindungsgemäßen Beispiele B1 - B7 näher erläutert.

Die kristallisierbaren Ausgangsgläser der Beispiele B1 bis B7 wurden aus in der Glasindustrie üblichen technischen Gemengerohstoffen bei Temperaturen von 1620 °C, 4 Stunden eingeschmolzen. Nach dem Einschmelzen des Gemenges in Tiegeln aus gesintertem Kieselglas wurden die Schmelzen in Pt/Rh-Tiegeln mit Innentiegel aus Kieselglas umgegossen und bei Temperaturen von 1600 °C, 60 Minuten durch Rühren homogenisiert. Nach dieser Homogenisierung wurden die Gläser für 2 Stunden bei 1640 °C geläutert. Anschließend wurden Stücke von ca. 120 × 140 × 30 mm³ Größe gegossen und in einem Kühlofen beginnend ab 640 °C auf Raumtemperatur abgekühlt, um Spannungen abzubauen. Die Gussstücke wurden in die für die Untersuchungen und für die Keramisierung benötigten Größen unterteilt.

Die Verunreinigungen durch typische Spurenelemente bei den verwendeten technischen Rohstoffen lagen bei 200 ppm $B_2O_3$, 30 ppm Cl, 1 ppm CoO, 3 ppm $Cr_2O_3$, 200 ppm $Cs_2O$, 3 ppm CuO, 200 ppm F, 400 ppm $HfO_2$, 3 ppm NiO, 500 ppm $Rb_2O$, 5 ppm $V_2O_5$.

Tabelle 1 zeigt die Zusammensetzung der Beispiele sowie einige ausgewählte Eigenschaften im glasigen Zustand, also vor der Keramisierung. Die Beispiele enthalten bis auf übliche Verunreinigungen kein SrO, $P_2O_5$ und $As_2O_3$ sowie insbesondere keines der Färbemittel $V_2O_5$, $Cr_2O_3$, $CeO_2$ und $WO_3$. Alle erfindungsgemäßen Beispiele enthalten zumindest MoOs als Färbemittel.

In Tabelle 2 sind ausgewählte Eigenschaften der Beispiele nach der Keramisierung dargestellt. Die Keramisierung der Proben ist mit einem Keramisierungsverfahren mit den folgenden Schritten erfolgt:

a) Aufheizen von Raumtemperatur auf 740 °C mit einer Heizrate von 27,7 °C/min.,
b) Temperaturerhöhung von 740 auf 825 °C mit einer Heizrate von 4,7 °C/min.,
c) Temperaturerhöhung von 825 °C bis 930 °C mit einer Heizrate von 26 °C/min.,
d) Haltezeit von 4 min. bei Maximaltemperatur 930 °C,
d) Abkühlen auf 800°C mit einer Kühlrate von 8,1 °C/min., dann schnelle Abkühlung auf Raumtemperatur durch Öffnen der Ofentür.

In Tabelle 2 sind die spektralen Transmissionsgrade bei verschiedenen Wellenlängen im sichtbaren und nahinfraroten Spektralbereich aufgeführt. Alle angegebenen Werte beziehen sich auf eine Dicke der Glaskeramik von 4 mm. Aus den Werten zeigt sich der für Abdeckplatten vorteilhafte Transmissionsverlauf mit niedriger Transmission im sichtbaren Spektralbereich von 380 bis 780 nm und einer hohen Transmission im Nahinfraroten von 780 bis 4000 nm. Durch einen solchen Verlauf ermöglicht die Glaskeramik die Herstellung von Abdeckplatten, die den Durchblick verhindert, aber Wärmestrahlung oder IR-Strahlung für optische Kommunikation oder Sensorik durchlassen.

Zusätzlich sind das Verhältnis T(630nm)/T(470nm) und der Gesamttransmissionsgrad angegeben.

Die Farbkoordinaten im CIExyY-Farbraum (1931, 2°) von Licht der Normlichtart D65 nach Durchtritt durch eine 4 mm Dicke Probe sind ebenfalls in Tabelle 2 aufgeführt. Die x- und y-Koordinaten sind ebenfalls in Fig. 2a und 2b dargestellt. Die Y-Koordinate ist identisch zum Lichttransmissionsgrad gemäß DIN EN 410.

Für die Beispiele B1 und B2 wurde die thermische Ausdehnung im Temperaturbereich 20 °C bis 700 °C bestimmt. Beide Proben liegen bei Werten von deutlich weniger als $1 \times 10^{-6}$ /K. Aufgrund dieser niedrigen Ausdehnung, sind diese Glaskeramiken besonders zur Verwendung in Abdeckplatten geeignet, die hohen Temperaturwechselbelastungen unterliegen, wie beispielsweise Kochfeldern.

Mittels Röntgenbeugung konnte bestätigt werden, dass alle Beispiele als Hauptkristallphase Hochquarzmischkristall ("HQMK") enthalten. Dies zeigt sich auch darin, dass die Proben bei einer Dicke von 4 mm praktisch keine mit dem bloßen Auge wahrnehmbare Streuung für sichtbares Licht aufwiesen.

Erfindungsgemäße Abdeckplatten können in einer Vielzahl von Anwendungen in Einrichtungs- oder Ausstattungsgegenständen verwendet werden.

In einer Ausführungsform kann eine erfindungsgemäße Abdeckplatte in einem Kochgerät als Kochplatte verwendet werden.

In einer weiteren Ausführungsform kann eine erfindungsgemäße Abdeckplatte zur Abdeckung einer Benutzerschnittstelle in einem Bedienfeld für die Steuerung wenigstens eines Haushaltsgeräts, insbesondere eines Kochgeräts, eines Backofens, eines Kühlschranks oder einer Dunstabzugshabe verwendet werden. In einer Weiterentwicklung dieser Ausführungsform kann das Bedienfeld für die Steuerung mehrerer Haushaltsgeräte, beispielsweise für ein Kochgerät, einen Backofen und eine Dunstabzugshaube, ausgelegt sein. Eine Dunstabzugshaube kann auch in Form einer sogenannten Downdraft-Abzugshaube in ein Kochgerät mit einer entsprechenden Abdeckplatte integriert sein. Hierfür kann dann die Abdeckplatte eine Aussparung aufweisen, in die die Downdraft-Abzugshaube eingesetzt werden kann.

In einer weiteren Ausführungsform kann eine erfindungsgemäße Abdeckplatte in einem Küchenmöbel, insbesondere einem Küchenschrank, einer Einbauküche oder einem Kochtisch als Arbeitsplatte verwendet werden.

In einer weiteren Ausführungsform kann eine erfindungsgemäße Abdeckplatte in einem Laborgerät, insbesondere einer Heizplatte, einem Ofen, einer Waage oder einem Labormöbel, insbesondere einem Abzug, einem Schrank oder einem Tisch zur Abdeckung einer Benutzerschnittstelle oder als Arbeitsplatte verwendet werden.

In einer weiteren Ausführungsform kann eine erfindungsgemäße Abdeckplatte als Kaminsichtscheibe, als Sichtscheiben für Verbrennungskammern, als Brandschutzverglasung, als Teil eines Gehäuses für mobile elektronische Geräte, insbesondere Mobiltelefone und Tablet-Computer, als Abdeckung für IR-Heizstrahler oder Gasbrenner, insbesondere in Gas-Grills, oder als Abdeckung für Induktionsladestationen, beispielsweise für Kraftfahrzeuge, verwendet werden.

Tabelle 1: Zusammensetzung und Eigenschaften vor Keramisierung der Beispiele B1-B4.

| Beispiel | | B1 | B2 | B3 | B4 |
|---|---|---|---|---|---|
| **Zusammensetzung** (Gew.%) | | | | | |
| $Li_2O$ | | 3,32 | 3,32 | 3,45 | 3,60 |
| $Na_2O$ | | 0,29 | 0,3 | 0,52 | 0,52 |
| $K_2O$ | | 0,53 | 0,5 | 0,57 | 0,60 |
| MgO | | 0,8 | 0,73 | 0,35 | 0,18 |
| CaO | | 0,6 | 0,5 | 0,55 | 0,70 |
| SrO | | | | | |
| BaO | | 1,43 | 1,71 | 1,19 | 1,65 |
| ZnO | | 2 | 1,86 | 2,12 | 2,17 |
| $Al_2O_3$ | | 20,8 | 22,5 | 21,24 | 21,16 |
| $SiO_2$ | | 65,4 | 63,4 | 65,55 | 65,12 |
| $TiO_2$ | | 3,11 | 3,77 | 3,41 | 3,31 |
| $ZrO_2$ | | 1,31 | 1,03 | 1,05 | 1,05 |
| $P_2O_5$ | | | | | |
| $SnO_2$ | | 0,24 | 0,24 | 0,25 | 0,25 |
| $As_2O_3$ | | | | | |
| $Fe_2O_3$ | | 0,083 | 0,081 | 0,07 | 0,07 |
| $V_2O_5$ | | | | | |
| $MoO_3$ | | 0,087 | 0,062 | 0,11 | 0,11 |
| $MnO_2$ | | | | 0,01 | 0,02 |
| $Cr_2O_3$ | | | | | |
| $CeO_2$ | | | | | |
| $WO_3$ | | | | | |
| $H_2O$ - Gehalt ($\beta$-OH) | $mm^{-1}$ | 0,0397 | 0,0442 | n.g. | n.g. |
| **Eigenschaften glasig** | | | | | |
| Transformationstemperatur Tg | °C | 675 | 672 | 687 | 682 |
| $10^2$ - Temperatur | °C | 1719 | 1684 | 1739 | 1735 |
| Verarbeitungstemperatur VA | °C | 1299 | 1278 | 1307 | 1303 |
| OEG-Temperatur | °C | 1215 | 1295 | 1260 | 1235 |

n.g. = nicht gemessen

Fortsetzung Tabelle 1: Zusammensetzung und Eigenschaften vor Keramisierung der Beispiele B5-B7.

| Beispiel | | B5 | B6 | B7 |
|---|---|---|---|---|
| **Zusammensetzung** (Gew.%) | | | | |
| $Li_2O$ | | 3,87 | 3,68 | 3,66 |
| $Na_2O$ | | 0,29 | 0,61 | 0,56 |
| $K_2O$ | | 0,3 | 0,42 | 0,38 |
| MgO | | 0,58 | 0,28 | 0,31 |
| CaO | | 0,21 | 0,42 | 0,45 |
| SrO | | | | |
| BaO | | 2,42 | 1,38 | 1,34 |
| ZnO | | 1,96 | 1,53 | 1,5 |
| $Al_2O_3$ | | 19,8 | 21,1 | 21,3 |
| $SiO_2$ | | 65,7 | 65,4 | 65,3 |
| $TiO_2$ | | 2,85 | 4,04 | 3,89 |
| $ZrO_2$ | | 1,53 | 0,64 | 0,7 |
| $P_2O_5$ | | | | |
| $SnO_2$ | | 0,4 | 0,27 | 0,28 |
| $As_2O_3$ | | | | |
| $Fe_2O_3$ | | 0,073 | 0,071 | 0,058 |
| $V_2O_5$ | | | | |
| $MoO_3$ | | 0,027 | 0,11 | 0,096 |
| $MnO_2$ | | | | 0,02 |
| $Cr_2O_3$ | | | | |
| $CeO_2$ | | | | |
| $WO_3$ | | | | |
| $H_2O$ - Gehalt (β-OH) | $mm^{-1}$ | 0,0434 | 0,0414 | 0,032 |
| **Eigenschaften glasig** | | | | |
| Transformationstemperatur Tg | °C | 664 | 670 | 669 |
| $10^2$ - Temperatur | °C | 1718 | 1729 | 1720 |
| Verarbeitungstemperatur VA | °C | 1299 | 1300 | 1301 |
| OEG-Temperatur | °C | 1260 | 1220 | 1225 |

n.g. = nicht gemessen

Tabelle 2: Eigenschaften nach Keramisierung der Beispiele B1-B4

| Beispiel | | B1 | B2 | B3 | B4 |
|---|---|---|---|---|---|
| **Transmission** | | | | | |
| 470 nm | % | 4,3 | 5,6 | 5,4 | 3,9 |
| 630 nm | % | 4,2 | 4,5 | 5,0 | 3,1 |
| 950 nm | % | 43,3 | 41,9 | 46,6 | 40,5 |
| 1600 nm | % | 71,2 | 73,1 | 73,8 | 73,6 |
| 3700 nm | % | 46,3 | 45,9 | n.g. | n.g. |
| T(630nm)/T(470nm) | | 0,98 | 0,8 | 0,92 | 0,78 |
| Gesamttransmissionsgrad | % | 6,01 | 7,18 | 7,35 | 4,99 |
| **Farbkoordinaten (CIExyY-2°) in Transmission** | | | | | |
| x | | 0,311 | 0,293 | 0,305 | 0,292 |
| y | | 0,303 | 0,292 | 0,297 | 0,286 |
| Helligkeit Y = Lichttransmissionsgrad | % | 3,4 | 4,1 | 4,1 | 2,7 |
| **Thermische Ausdehnung** | | | | | |
| $\alpha_{20/700}$ | $10^{-6}$/K | 0,39 | 0,62 | n.g. | n.g. |
| **Röntgenbeugung** | | | | | |
| Hauptkristallphase | | HQMK | HQMK | HQMK | HQMK |

Fortsetzung Tabelle 2: Eigenschaften nach Keramisierung der Beispiele B5-B7 und der Vergleichsbeispiele V1 und V2.

| Beispiel | | B5 | B6 | B7 | V1 | V2 |
|---|---|---|---|---|---|---|
| **Transmission** | | | | | | |
| 470 nm | % | 3,34% | 2,88% | 3,90% | 0,4% | 1,6% |
| 630 nm | % | 4,85% | 4,51% | 5,39% | 4,7% | 1,3% |
| 950 nm | % | 37,52% | 44,19% | 45,53% | n.g. | n.g. |
| 1600 nm | % | 76,53% | 75,65% | 77,87% | n.g. | n.g. |
| 3700 nm | % | n.g. | n.g. | n.g. | n.g. | n.g. |
| T(630nm)/T(470nm) | | 1,45 | 1,57 | 1,38 | 11,75 | 0,81 |
| Gesamttransmissionsgrad | % | 5,89% | 5,35% | 6,65% | 4,7% | 2,1% |
| **Farbkoordinaten (CIExyY-2°) in Transmission** | | | | | | |
| x | | 0,350 | 0,353 | 0,342 | n.g. | n.g. |
| y | | 0,354 | 0,338 | 0,335 | n.g. | n.g. |
| Helligkeit Y = Lichttransmissionsgrad | % | 3,80% | 3,25% | 4,10% | 1,5 % | 1,6 % |
| **Thermische Ausdehnung** | | | | | | |
| $\alpha_{20/700}$ | $10^{-6}$/K | 0,19 | 0,2 | 0,15 | n.g. | n.g. |
| **Röntgenbeugung** | | | | | | |
| Hauptkristallphase | | HQMK | HQMK | HQMK | HQMK | HQMK |

n.g. = nicht gemessen

**Patentansprüche**

1. Abdeckplatte für einen Einrichtungs- oder Ausstattungsgegenstand für eine Küche oder ein Labor mit einem Grundkörper aus transparenter, volumengefärbter Glaskeramik, der bei einer Dicke von 4 mm **gekennzeichnet ist durch**

   - einen Gesamttransmissionsgrad $T_{ges} = \sqrt{T(630nm)^2 + T(470nm)^2}$ mit einem Wert von mindestens 4,9 % und höchstens 8,5 %, wobei T(630nm) der spektrale Lichttransmissionsgrad bei einer Wellenlänge des Lichtes von 630 nm und T(470nm) der spektrale Lichttransmissionsgrad bei einer Wellenlänge des Lichtes von 470 nm ist, und
   - ein Verhältnis von T(630nm) zu T(470nm) von mindestens 0,65 und höchstens 2,7,
   - wobei der Farbort von Licht der Normlichtart D65 nach Durchtritt durch den Grundkörper bei einer Dicke von 4 mm innerhalb des Weißbereichs W1 im Chromatizitätsdiagramm CIExyY-2° liegt:

   | Weißbereich W1 | |
   |---|---|
   | x | y |
   | 0,27 | 0,21 |
   | 0,22 | 0,25 |
   | 0,32 | 0,37 |
   | 0,45 | 0,45 |
   | 0,47 | 0,34 |
   | 0,36 | 0,29 |

2. Abdeckplatte nach Anspruch 1, wobei das Verhältnis von T(630nm) zu T(470nm) mindestens 0,9 und höchstens 2,7 beträgt.

3. Abdeckplatte nach Anspruch 1 oder 2, mit einem Gesamttransmissionsgrad $T_{ges} = \sqrt{T_{630}^2 + T_{470}^2}$ von mindestens 4,9 % und höchstens 6,5 %.

4. Abdeckplatte nach einem der vorhergehenden Ansprüche, wobei der Grundkörper bei einer Dicke von 4 mm einen Lichttransmissionsgrad von mindestens 2,5 % und höchstens 5 % aufweist.

5. Abdeckplatte nach Anspruch 1, mit einem Mittel zur Reduktion des Lichttransmissionsgrades, wobei das Mittel zur Reduktion des Lichttransmissionsgrades eine auf den Grundkörper aufgebrachte Beschichtung, eine aufgeklebte oder angedrückte Folie oder eine aufgeklebte oder angedrückte Platte ist, wobei das Mittel zur Reduktion des Lichttransmissionsgrades zusammen mit dem Grundkörper einen Lichttransmissionsgrad von weniger als 2,5 %, bevorzugt weniger als 0,1 %, besonders bevorzugt weniger als 0,01 % oder sogar von weniger als 0,001 % aufweist und wobei das Mittel wenigstens eine Aussparung, durch die Licht hindurchtreten kann, aufweist.

6. Abdeckplatte nach einem der vorhergehenden Ansprüche, mit einem Diffusor in Form einer Beschichtung, Folie oder Platte oder einem Bereich mit ausreichend hoher Rauheit der Oberfläche der Abdeckplatte, einer Beschichtung, einer Folie oder einer Platte.

7. Abdeckplatte nach einem der vorhergehenden Ansprüche, mit einem Schwarzkörperkompensationsfilter in Form einer Schicht, einer Folie oder einer Platte.

8. Abdeckplatte nach einem der vorhergehenden Ansprüche, mit einem Farbfilter in Form einer Schicht, einer Folie oder einer Platte.

9. Abdeckplatte nach einem der vorhergehenden Ansprüche, wobei die Glaskeramik des Grundkörpers eine LAS-Glaskeramik ist, die die folgenden Bestandteile enthält: 0,005 - 0,25 Gew.-% MoOs und vorzugsweise 0 - 0,2 Gew.-% $Nd_2O_3$ und/oder 0 - 0,01 Gew.-% $V_2O_5$.

**10.** Abdeckplatte nach einem der vorhergehenden Ansprüche, wobei die Glaskeramik des Grundkörpers im Wesentlichen besteht aus, in Gew.-% auf Oxidbasis,

| | |
|---|---|
| $Li_2O$ | 2,5 - 5,5 |
| $\Sigma\ Na_2O + K_2O$ | 0,1 - < 4 |
| MgO | 0-3 |
| $\Sigma\ CaO + SrO + BaO$ | 0 - 5 |
| ZnO | 0 - 4 |
| $B_2O_3$ | 0 - 3 |
| $Al_2O_3$ | 16 - 26 |
| $SiO_2$ | 58 - 72 |
| $TiO_2$ | 1,5 - 5,5 |
| $ZrO_2$ | 0 - 2,5 |
| $SnO_2$ | 0,05 - < 0,7 |
| $\Sigma\ TiO_2 + ZrO_2 + SnO_2$ | 3 - 6,5 |
| $P_2O_5$ | 0 - 4 |
| MoOs | 0,005 - 0,25 |
| $Fe_2O_3$ | 0 - 0,25 |
| $Nd_2O_3$ | 0-0,4 |
| $Cr_2O_3$ | 0 - 0,2 |
| $MnO_2$ | 0 - 0,5 |
| V2O5 | 0 - 0,01. |

**11.** Verwendung einer Abdeckplatte nach einem der vorhergehenden Ansprüche wobei der Einrichtungs- oder Ausstattungsgegenstand ein Kochgerät ist und die Abdeckplatte als Kochplatte verwendet wird.

**12.** Verwendung einer Abdeckplatte nach einem der Ansprüche 1 bis 10 zur Abdeckung einer Benutzerschnittstelle in einem Bedienfeld für die Steuerung wenigstens eines Haushaltsgeräts, insbesondere eines Kochgeräts, eines Backofens, eines Kühlschranks oder einer Dunstabzugshabe.

**13.** Verwendung einer Abdeckplatte nach einem der Ansprüche 1 bis 10 wobei der Einrichtungs- oder Ausstattungsgegenstand ein Küchenmöbel, insbesondere ein Küchenschrank, eine Einbauküche oder ein Kochtisch ist und die Abdeckplatte als Arbeitsplatte verwendet wird.

**14.** Verwendung einer Abdeckplatte nach einem der Ansprüche 1 bis 10 wobei der Einrichtungs- oder Ausstattungsgegenstand ein Laborgerät, insbesondere eine Heizplatte, ein Ofen, eine Waage oder ein Labormöbel, insbesondere ein Abzug, ein Schrank oder ein Tisch ist, und die Abdeckplatte zur Abdeckung einer Benutzerschnittstelle oder als Arbeitsplatte verwendet wird.

**15.** Verwendung einer Abdeckplatte nach einem der Ansprüche 1 bis 10 als Kaminsichtscheibe, als Sichtscheibe für Verbrennungskammern, als Brandschutzverglasung, als Teil eines Gehäuses für mobile elektronische Geräte, insbesondere Mobiltelefone und Tablet-Computer, als Abdeckung für IR-Heizstrahler oder Gasbrenner, insbesondere in Gas-Grills, oder als Abdeckung für Induktionsladestationen, beispielsweise für Kraftfahrzeuge

**Claims**

**1.** Cover panel for a fitout article or article of equipment for a kitchen or a laboratory, having a base element composed of transparent, volume-coloured glass-ceramic, which at a thickness of 4 mm is **characterized by**

$$T_{tot} = \sqrt{T(630nm)^2 + T(470nm)^2}$$

- a total transmittance having a value of at least 4.9% and at most 8.5%, where T(630nm) is the spectral light transmittance at a light wavelength of 630nm and T(470nm) is the spectral light transmittance at a light wavelength of 470nm, and

- a ratio of T(630nm) to T(470nm) of at least 0.65 and at most 2.7,
- wherein the colour locus of standard illuminant D65 after passage through the base element at a thickness of 4 mm lies within the white range W1 in the CIExyY-2° chromaticity diagram:

| White Range W1 | |
|---|---|
| x | y |
| 0.27 | 0.21 |
| 0.22 | 0.25 |
| 0.32 | 0.37 |
| 0.45 | 0.45 |
| 0.47 | 0.34 |
| 0.36 | 0.29 |

2. Cover panel according to Claim 1, wherein the ratio of T(630nm)to T(470nm) is at least 0.9 and at most 2.7.

3. Cover panel according to Claim 1 or 2, having a total transmittance $T_{tot} = \sqrt{T_{630}^2 + T_{470}^2}$ of at least 4.9% and at most 6.5%.

4. Cover panel according to any of the preceding claims, wherein the base element at a thickness of 4 mm has a light transmittance of at least 2.5% and at most 5%.

5. Cover panel according to Claim 1, having a means for reducing the light transmittance, wherein the means for reducing the light transmittance is a coating applied to the base element, a film adhered or pressed on or a plate adhered or pressed on, wherein the means for reducing the light transmittance together with the base element has a light transmittance of less than 2.5%, preferably less than 0.1%, more preferably less than 0.01% or, even, less than 0.001% and wherein the means has at least one cutout through which light is able to pass.

6. Cover panel according to any of the preceding claims, having a diffuser in the form of a coating, film or sheet or having a region with sufficiently high roughness of the surface of the cover panel, a coating, a film or a sheet.

7. Cover panel according to any of the preceding claims, having a black-body compensation filter in the form of a layer, a film or a sheet.

8. Cover panel according to any of the preceding claims, having a colour filter in the form of a layer, a film or a sheet.

9. Cover panel according to any of the preceding claims, wherein the glass-ceramic of the base element is a LAS glass-ceramic which contains the following constituents: 0.005 - 0.25 wt% $MoO_3$ and preferably 0 - 0.2 wt% $Nd_2O_3$ and/or 0 - 0.01 wt% $V_2O_5$.

10. Cover panel according to any of the preceding claims, wherein the glass-ceramic of the base element consists essentially of, in wt% based on oxide,

| | |
|---|---|
| $Li_2O$ | 2.5 - 5.5 |
| $\Sigma\ Na_2O + K_2O$ | 0.1 - < 4 |
| MgO | 0 - 3 |
| $\Sigma\ CaO + SrO + BaO$ | 0 - 5 |
| ZnO | 0 - 4 |
| $B_2O_3$ | 0 - 3 |
| $Al_2O_3$ | 16 - 26 |

(continued)

| | |
|---|---|
| SiO$_2$ | 58 - 72 |
| TiO$_2$ | 1.5 - 5.5 |
| ZrO$_2$ | 0 - 2.5 |
| SnO$_2$ | 0.05 - < 0.7 |
| Σ TiO$_2$ + ZrO$_2$ + SnO$_2$ | 3 - 6.5 |
| P$_2$O$_5$ | 0 - 4 |
| MoO$_3$ | 0.005 - 0.25 |
| Fe$_2$O$_3$ | 0 - 0.25 |
| Nd$_2$O$_3$ | 0 - 0.4 |
| Cr$_2$O$_3$ | 0 - 0.2 |
| MnO$_2$ | 0 - 0.5 |
| V$_2$O$_5$ | 0 - 0.01 |

**11.** Use of a cover panel according to any of the preceding claims, wherein the fitout article or article of equipment is a cooking appliance and the cover panel is used as a cooktop.

**12.** Use of a cover panel according to any of Claims 1 to 10 for covering a user interface in a control panel for controlling at least one household appliance, more particularly a cooking appliance, a baking oven, a refrigerator or an extractor hood.

**13.** Use of a cover panel according to any of Claims 1 to 10, wherein the fitout article or article of equipment is an item of kitchen furniture, more particularly a kitchen cupboard, a fitted kitchen or a cooking table and the cover panel is used as a worktop.

**14.** Use of a cover panel according to any of Claims 1 to 10, wherein the fitout article or article of equipment is a laboratory appliance, more particularly a hot plate, an oven, a balance or an item of laboratory furniture, more particularly a fume extractor, a cupboard or a bench, and the cover panel is used for covering a user interface or as a worktop.

**15.** Use of a cover panel according to any of Claims 1 to 10 as a stove viewing window, as a viewing window for combustion chambers, as fire safety glazing, as part of a housing for mobile electronic devices, more particularly mobile telephones and tablet computers, as a cover for IR heat emitters or gas burners, more particularly in gas grills, or as a cover for induction charging stations, for example for motor vehicles.

**Revendications**

**1.** Plaque de couverture pour un article d'ameublement ou d'équipement pour une cuisine ou un laboratoire, comportant un corps de base en vitrocéramique transparente, teintée dans la masse, qui pour une épaisseur de 4 mm est **caractérisé par**

- un degré de transmission totale $T_{tot} = \sqrt{T(630nm)^2 + T(470nm)^2}$ ayant une valeur d'au moins 4,9 % et d'au maximum 8,5 %, T(630nm) étant le degré de transmission de lumière spectrale à une longueur d'onde de la lumière de 630 nm et T(470nm) le degré de transmission de lumière spectrale à une longueur d'onde de la lumière de 470 nm, et
- un rapport de T(630nm) à T(470nm) d'au moins 0,65 et d'au maximum 2,7,
- le lieu de couleur de lumière du type de lumière normalisée D65 après passage à travers le corps de base pour une épaisseur de 4 mm se situant à l'intérieur de la zone blanche W1 dans le diagramme de chromaticité CIExyY-2° :

| Zone blanche W1 | |
|---|---|
| x | y |
| 0,27 | 0,21 |
| 0,22 | 0,25 |
| 0,32 | 0,37 |
| 0,45 | 0,45 |
| 0,47 | 0,34 |
| 0,36 | 0,29 |

**2.** Plaque de couverture selon la revendication 1, dans laquelle le rapport de T(630nm) à T(470nm) est d'au moins 0,9 et d'au maximum 2,7.

**3.** Plaque de couverture selon la revendication 1 ou 2, ayant un degré de transmission totale

$$T_{tot} = \sqrt{T_{630}{}^2 + T_{470}{}^2}$$

d'au moins 4,9 % et d'au maximum 6,5 %.

**4.** Plaque de couverture selon l'une quelconque des revendications précédentes, dans laquelle le corps de base présente pour une épaisseur de 4 mm un degré de transmission de la lumière d'au moins 2,5 % et d'au maximum 5 %.

**5.** Plaque de couverture selon la revendication 1, comportant un moyen destiné à la réduction du degré de transmission de la lumière, dans laquelle le moyen destiné à la réduction du degré de transmission de la lumière est un revêtement appliqué sur le corps de base, un film collé ou appliqué par pression ou une plaque collée ou appliquée par pression, dans laquelle le moyen destiné à la réduction du degré de transmission de la lumière présente conjointement avec le corps de base un degré de transmission de la lumière de moins de 2,5 %, de préférence de moins de 0,1 %, de façon particulièrement préférée de moins de 0,01 % ou même de moins de 0,001 % et dans laquelle le moyen présente au moins un évidement à travers lequel la lumière peut passer.

**6.** Plaque de couverture selon l'une quelconque des revendications précédentes, comportant un diffuseur sous forme d'un revêtement, d'un film ou d'une plaque ou une zone à rugosité suffisamment élevée de la surface de la plaque de couverture, d'un revêtement, d'un film ou d'une plaque.

**7.** Plaque de couverture selon l'une quelconque des revendications précédentes, comportant un filtre de compensation de corps noir sous forme d'une couche, d'un film ou d'une plaque.

**8.** Plaque de couverture selon l'une quelconque des revendications précédentes, comportant un filtre coloré sous forme d'une couche, d'un film ou d'une plaque.

**9.** Plaque de couverture selon l'une quelconque des revendications précédentes, dans laquelle la vitrocéramique du corps de base est une vitrocéramique LAS qui contient les constituants suivants : 0,005 - 0,25 % en poids de $MoO_3$ et de préférence 0 - 0,2 % en poids de $Nd_2O_3$ et/ou 0 - 0,01 % en poids de $V_2O_5$.

**10.** Plaque de couverture selon l'une quelconque des revendications précédentes, dans laquelle la vitrocéramique du corps de base est essentiellement constituée de, en % en poids sur la base des oxydes,

| | |
|---|---|
| $Li_2O$ | 2,5 - 5,5 |
| $\Sigma\ Na_2O + K_2O$ | 0,1 - <4 |
| MgO | 0 - 3 |
| $\Sigma\ CaO + SrO + BaO$ | 0 - 5 |
| ZnO | 0 - 4 |
| $B_2O_3$ | 0 - 3 |

(suite)

| | |
|---|---|
| $Al_2O_3$ | 16 - 26 |
| $SiO_2$ | 58 - 72 |
| $TiO_2$ | 1,5 - 5,5 |
| $ZrO_2$ | 0 - 2,5 |
| $SnO_2$ | 0,05 - <0,7 |
| $\Sigma\ TiO_2 + ZrO_2 + SnO_2$ | 3 - 6,5 |
| $P_2O_5$ | 0 - 4 |
| $MoO_3$ | 0,005 - 0,25 |
| $Fe_2O_3$ | 0 - 0,25 |
| $Nd_2O_3$ | 0 - 0,4 |
| $Cr_2O_3$ | 0 - 0,2 |
| $MnO_2$ | 0 - 0,5 |
| $V_2O_5$ | 0 - 0,01. |

**11.** Utilisation d'une plaque de couverture selon l'une quelconque des revendications précédentes, dans laquelle l'article d'ameublement ou d'équipement est un appareil de cuisson et la plaque de couverture est utilisée comme plaque de cuisson.

**12.** Utilisation d'une plaque de couverture selon l'une quelconque des revendications 1 à 10, pour le recouvrement d'une interface utilisateur dans un panneau de commande pour la commande d'au moins un appareil ménager, en particulier d'un appareil de cuisson, d'un four de cuisson, d'un réfrigérateur ou d'une hotte aspirante.

**13.** Utilisation d'une plaque de couverture selon l'une quelconque des revendications 1 à 10, dans laquelle l'article d'ameublement ou d'équipement est un meuble de cuisine, en particulier un réfrigérateur, une cuisine intégrée ou une table de cuisson et la plaque de couverture est utilisée en tant que plan de travail.

**14.** Utilisation d'une plaque de couverture selon l'une quelconque des revendications 1 à 10, dans laquelle l'article d'ameublement ou d'équipement est un appareil de laboratoire, en particulier une plaque chauffante, un four, une balance ou un meuble de laboratoire, en particulier une hotte, une armoire ou une table, et la plaque de couverture est utilisée pour la couverture d'une interface utilisateur ou en tant que plan de travail.

**15.** Utilisation d'une plaque de couverture selon l'une quelconque des revendications 1 à 10, en tant que vitre de cheminée, en tant que vitre d'observation pour chambres de combustion, en tant que vitrage anti-incendie, en tant que partie d'un boîtier pour appareils électroniques mobiles, en particulier téléphones mobiles et ordinateurs-tablettes, en tant que couverture pour radiateurs IR ou brûleurs à gaz, en particulier dans des grils à gaz, ou en tant que couverture pour stations de recharge à induction, par exemple pour des véhicules automobiles.

Figur 1

Figur 2a

Figur 2b

**EP 3 730 463 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008050263 A1
- DE 202018102537 U1
- DE 202018102534 U1